# FASCICULE DE BREVET EUROPEEN

(11) **EP 4 185 490 B1**
(45) Date de publication et mention de la délivrance du brevet: **02.07.2025**
(21) Numéro de dépôt: 21755008.6
(22) Date de dépôt: 15.07.2021
(51) Int. Cl.: B60R 7/04

(54) **RANGEMENT A VOLET INTERIEUR MOBILE**
LAGER MIT MOBILEM INNENVERSCHLUSS
STORAGE WITH MOBILE INTERIOR SHUTTER

(30) Priorité: 23.07.2020 FR 2007740
(43) Date de publication de la demande: 31.05.2023
(73) Titulaire: Stellantis Auto SAS, 78300 Poissy (FR)
(72) Inventeur: PORET, Benoit, 78117 CHATEAUFORT (FR)
(74) Mandataire: BCIP
(86) Numéro de dépôt international: PCT/FR2021/051322
(87) Numéro de publication internationale: WO 2022/018361

(56) Documents cités:
- EP-A2- 1 284 216
- US-A1- 2006 037 984

## Description

La présente invention concerne un dispositif de rangement installé dans un véhicule, notamment dans la console centrale entre les passagers d'un véhicule, ainsi qu'un véhicule équipé d'un tel dispositif.

Il est connu de placer dans un habitacle de véhicule des cavités pour créer des boîtes rangement. De tels boîtes de rangement sont souvent placés dans une console centrale, la console centrale étant un élément d'habillage de l'habitacle située entre les sièges avant du véhicule, s'étendant en longueur vers l'arrière du véhicule depuis une planche de bord disposée devant les passagers avant. Le document EP1284216 décrit une telle boîte de rangement installée sur une console central d'un véhicule, comportant une ouverture permettant d'accéder à son volume intérieure, ladite ouverture pouvant être fermée par un couvercle pivotant autour d'un axe de rotation. Un volet de fermeture est disposé dans le volume intérieur, et pivote autour du même axe de rotation que le couvercle, entre une position fermée et une position ouverte. L'axe de rotation est disposé sur le bord de l'ouverture, et la liaison du volet et du couvercle avec cet axe de rotation n'est pas démontable. Le volet a une forme en creux de sorte que lorsqu'il est en position fermée, il bloque l'accès au volume intérieur disposé entre le fond de la boîte et ledit volet, et laisse un volume disponible entre lui et le couvercle. Le volet et le couvercle pivote autour du même axe, et le volet se verrouille sur le couvercle. Une commande permet d'ouvrir le couvercle en choisissant d'entraîner ou non le volet, et ainsi accéder ou non au volume disposé sous le volet.

L'inconvénient d'une telle solution est que le montage du volet sur la boîte est complexe, et le volet n'est pas démontable. De plus, l'axe de rotation étant disposé sur le bord de l'ouverture de la boîte, le volet doit avoir une forme en creux prononcé pour offrir un volume de rangement suffisant entre l'ouverture de la boîte et ledit volet en position fermée.

L'objectif de l'invention est de remédier à ces inconvénients. En particulier, l'un des buts de l'invention est de réaliser une boîte de rangement avec un volet séparant son volume intérieur en deux parties, simple à réaliser et à monter, et dont le volet peut être démontable.

. Ce but est atteint selon l'invention grâce à une boîte de rangement (2) comportant des parois latérales (201, 203, 204) et une paroi de fond (202) définissant un volume intérieur (21), ledit volume intérieur (21) étant accessible par une ouverture (22), un volet (3) de fermeture disposée dans le volume intérieur (20), entre l'ouverture (22) et la paroi de fond (202), mobile par rotation entre une position de fermeture dans laquelle le volet (3) bloque l'accès à un volume inférieur (211) située entre la paroi de fond et ledit volet (3) et une position d'ouverture dans laquelle le volume inférieur (211) est accessible depuis l'extérieur du rangement, relié par une liaison pivot sur deux des parois latérales (201) se faisant face, remarquable en ce que la boîte de rangement (2) comporte deux renfoncements de rotation (26) sur les deux parois latérales (201) se faisant face et le volet (3) comporte deux éléments de rotation (31) en saillies disposés sur deux bords opposés du volet (3), s'insérant chacun dans un des renfoncements de rotation (26) de sorte à guider en rotation ledit volet (3) autour d'un axe de rotation passant par ces deux éléments de rotation (31). La boîte de rangement (2) comporte un moyen de blocage (23, 32) du volet (3) en position ouverte. Le moyen de blocage (23, 32) comporte un renfoncement de blocage (23) en position ouverte dans une des parois latérales (201) et un élément de blocage (32) en saillie sur le volet (3) et dirigé vers la paroi latérale (201), le renfoncement de blocage (23) en position ouverte et l'élément de blocage (32) étant disposés de sorte que l'élément de blocage (32) s'insère dans le renfoncement de blocage (23) lorsque ledit volet (3) est en position ouverte et à bloquer ledit volet (3) dans cette position ouverte.

Le volet est ainsi relié à la boîte par un emboîtement des éléments de rotation dans les renfoncements de rotation. Ainsi avantageusement, la liaison entre le volet et les parois latérale est facilement démontable, notamment en donnant une certaine flexibilité aux parois ou au volet. De plus, elle est simple à réaliser et ne nécessite pas de montage complexe. Le nombre de pièces pour réaliser le rangement avec le volet pivotant est aussi avantageusement réduit. Le fait que les éléments de rotation en saillie soient sur le volet facilite le montage du volet dans la boîte et l'insertion de ces éléments de rotation dans les renfoncements. Un autre avantage est que l'axe de rotation peut être facilement située au milieu des parois latérales de la boîte.

Le volet peut être maintenu en position ouverte sans nécessite de le maintenir à la main.

Le moyen de blocage est simple à réaliser et ne nécessite pas de montage complexe. Le nombre de pièces pour réaliser le rangement avec le volet pivotant et blocable en position ouverte est réduit. De plus, le déblocage est facile à réaliser en actionnant le volet de sorte à appliquer un effort supérieur à celui issu du blocage par l'emboîtement de l'élément de blocage dans le renfoncement de blocage.

Dans un autre mode de réalisation de l'invention, la boîte de rangement (2) comporte un moyen de blocage (24, 32) en position fermée formé par un renfoncement de blocage (24) en position fermée dans une des parois latérales (201) et un élément de blocage (32) en saillie sur le volet (3) et dirigé vers la paroi latérale (201), le renfoncement de blocage (24) en position fermée et l' élément de blocage (32) en saillie étant disposés de sorte que l'élément de blocage (32) en saillie s'insère dans le renfoncement de blocage (24) en position fermée lorsque ledit volet (3) est en position fermée et à bloquer ledit volet (3) dans cette position fermée.

Ainsi avantageusement, le moyen de blocage en position fermée est simple à réaliser et ne nécessite de montage complexe. Le nombre de pièces pour réaliser le rangement avec le volet pivotant et blocable en position fermée est réduit. De plus, le déblocage est facile à réaliser en actionnant le volet de sorte à appliquer un effort supérieur à celui issu de l'emboîtement de l'élément de blocage dans le renfoncement de blocage.

Dans un autre mode de réalisation de l'invention, la boîte de rangement (2) comporte un élément de blocage (32) disposé sur le volet (3) et deux renfoncements de blocage, un premier renfoncement (23) en position fermée et un deuxième renfoncement (24) en position ouverte sur une des parois latérales (201), l'élément de blocage (32) s'insérant dans le premier renfoncement de blocage (23) de sorte à bloquer ledit volet (3) en position ouverte et s'insérant dans le deuxième renfoncement de blocage (24) disposé de sorte à bloquer ledit volet (3) en position fermée, de préférence la partie de la paroi latérale (201) comportant les deux renfoncements de blocage (23, 24) étant sensiblement perpendiculaire à l'axe de rotation du volet (3).

Ainsi avantageusement, un seul élément de blocage en saillie seul deux renfoncements sont nécessaires pour réaliser et le moyen de blocage en position ouverte et le moyen de blocage en position fermée.

Dans un autre mode de réalisation de l'invention, la boîte de rangement comporte une rainure (25) sur la paroi latérale (201) qui comporte les deux renfoncements de blocage (23, 24), ladite rainure (25) reliant le premier (23) et le deuxième renfoncement de blocage (24) suivant un arc de cercle centré sur l'axe de rotation du volet (3) de sorte que l'élément de blocage (32) se déplace dans ladite rainure (25) lors du déplacement du volet (3) entre la position fermée et la position ouverte, la rainure (25) étant de profondeur inférieure à la profondeur des renfoncements de blocage (23, 24).

Ainsi avantageusement, les frottements de l'élément de blocage contre la paroi latérale sont réduits lors du déplacement entre la position ouverte et fermée du volet, évitant une usure rapide de la surface de ladite paroi latérale et/ou de l'élément de blocage par frottement. La profondeur inférieure de la rainure à celle des deux renfoncements de blocage permet d'assurer le maintien du volet en position en position ouverte et en position fermée.

Dans un autre mode de réalisation de l'invention, le volet (3) comporte une paroi plane (30) avec deux bords latéraux parallèles, deux pattes (33) s'étendant perpendiculairement à la paroi plane (30) depuis les bords latéraux du volet (3), perpendiculairement à l'axe de rotation dudit volet (3), chacune des pattes (33) comportant un élément de rotation (31) et/ou un élément de blocage (32).

Ainsi avantageusement, les pattes permettent de décaler l'axe de rotation ou les éléments de blocage en dehors de la paroi plane du volet. De plus, en plaçant les éléments de blocage sur les pattes, lesdites pattes offrant une certaine flexibilité, les efforts nécessaires pour débloquer le volet de sa position fermée ou de sa position ouverte et le déplacer entre ces deux positions sont réduits du fait de cette flexibilité.

Dans un autre mode de réalisation de l'invention, le ou les renfoncements (23, 24, 26) sont de forme hémisphérique et le ou les éléments en saillie (31, 32) sont de forme hémisphérique complémentaire à la forme hémisphérique du ou de leur renfoncements respectifs (23, 24, 26).

Ainsi avantageusement, la forme hémisphérique permet un bon blocage, sans jeux, du volet, et facilite le déblocage dudit volet lors du déplacement du volet depuis la position fermée ou la position ouverte vers l'autre de ces positions.

L'invention porte aussi sur un véhicule comportant une boîte de rangement (2) tel que décrite précédemment dans son habitacle, de préférence dans une console centrale ou une planche de bord.

L'invention sera mieux comprise à la lecture de la description qui va suivre, donnée uniquement à titre d'exemple et faite en se référant aux dessins annexés, sur lesquels :
[Fig.1] représente le milieu d'une planche de bord avec une console centrale d'un véhicule, la console centrale étant équipée d'une boîte de rangement suivant l'invention.
[Fig.2] représente une vue en coupe dans un plan médian longitudinal et vertical au véhicule de la boîte de rangement de la figure 1 avec un volet en position fermée
[Fig. 3] est une vue similaire à la figure 2 avec le volet en position ouverte.
[Fig. 4] est une vue éclatée du rangement montrant le volet séparé de la boîte de rangement.

Les dessins sont des représentations schématiques pour faciliter la compréhension de l'invention. Les composants ne sont pas forcément représentés à l'échelle. Les mêmes références correspondent aux mêmes composants d'une figure à l'autre.

### Description générale

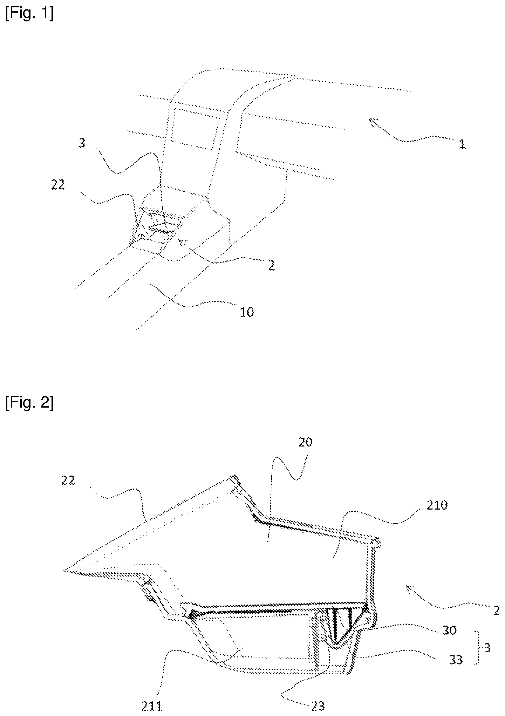

La figure 1 représente une planche de bord 1 d'un véhicule avec une console centrale 10 s'étendant entre les passagers avant du véhicule. Une boîte de rangement 2 est disposée dans la console centrale 10. Dans l'exemple de la figure 1, la boite de rangement 2 est disposée dans la console centrale 10, à la jonction avec la planche de bord 1. En variante, la boite de rangement 2 peut être disposé à d'autres endroit dans le véhicule, comme par exemple en partie arrière de la console centrale 10 ou encore dans la planche de bord 1. La boîte de rangement 2 définie un volume intérieur 20, accessible par une ouverture 22. Le volume intérieur 20 est délimité par des parois latérales 201, des parois avant 204 et arrière 203, une paroi de fond 202 et l'ouverture 22.

Comme illustré en figure 1, 2 et 3, un volet de fermeture 3 est disposé à l'intérieur de la boîte de rangement 2, c'est-à-dire dans le volume intérieur 20, entre l'ouverture 22 et la paroi de fond 202. Il est mobile par rotation autour d'un axe de rotation, entre une position de fermeture dans laquelle il bloque l'accès à un volume inférieur 211 située entre la paroi de fond 202 et ledit volet 3, et une position d'ouverture dans laquelle le volume inférieur 211 est accessible depuis l'extérieur de la boîte de rangement 2. Il est relié par une liaison pivot sur deux des parois latérales 201 se faisant face, définissant l'axe de rotation du volet 3. En position fermée, le volet 3 sépare le volume intérieur 20 en deux : le volume inférieur 211 et le volume supérieur 210 situé entre ledit volet 3 et l'ouverture 22.

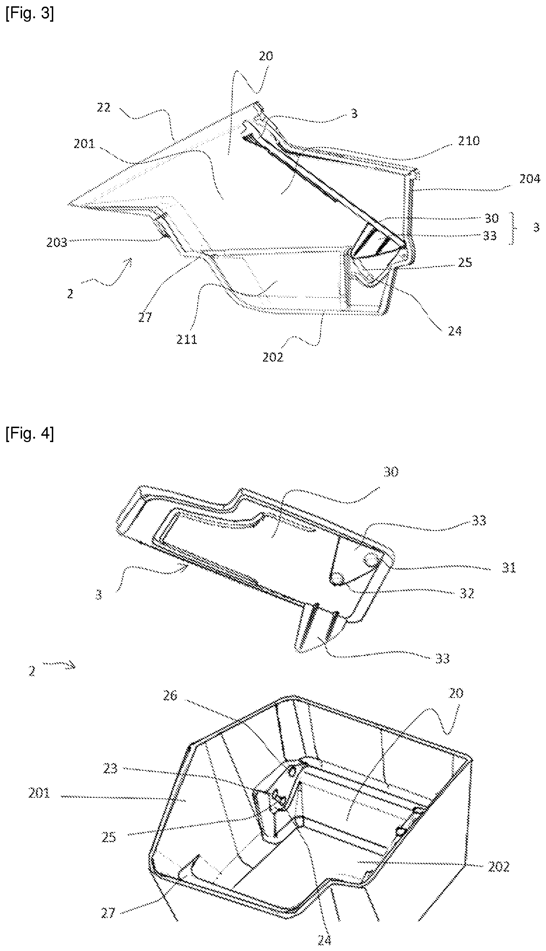

Comme illustré en figure 4, la liaison pivot est formée par deux renfoncements de rotation 26 disposés chacun sur chacun sur l'une des deux parois latérales 201 du rangement se faisant face, et par deux éléments de rotation en saillies disposés chacun sur deux bords opposés du volet 3. Les éléments de rotation 31, s'insérant chacun dans un des renfoncements de rotation 26 de sorte à guider en rotation ledit volet 3 autour d'un axe de rotation passant par ces deux éléments de rotation 26. Les renfoncements 26 ou/et les éléments de rotation 31 en saillies sont par exemple de forme cylindrique de section circulaire de manière à permettre cette rotation, ou encore hémisphérique.

Pour maintenir le volet 3 en position ouverte, comme illustré en figure 3, la boîte 2 comporte en outre sur chacune des parois latérales 201 comportant les renfoncements de rotation 26, un renfoncement de blocage 23 en position ouverte du volet 3, et le volet 3 comporte deux éléments de blocage en saillies 32, orientées vers lesdites parois latérales 201. En position ouverte du volet 3, chacun des éléments de blocage 32 s'insère dans un des renfoncements de blocage 26.

Dans le mode de réalisation représenté dans les figures, pour maintenir le volet 3 en position fermée, le boîte 2 comporte aussi sur chacune des parois latérales 201 comportant les renfoncements de rotation 26, un renfoncement de blocage 24 en position fermée. Ces renfoncements de blocage 26 sont disposés de sorte que lorsque le volet 3 est en position fermée, les éléments de blocage 32 s'insèrent dans un des renfoncements de blocage 24 en position fermée.

Sur chacun de ces parties des parois latérales 201 comportant les renfoncements de blocage 23 et 24, une rainure 25 relie ces deux renfoncements de blocage 23 et 24 suivant un arc de cercle centré sur l'axe de rotation du volet 3. Lorsque le volet 3 pivote autour de l'axe de rotation entre la position fermée et la position ouverte, l'élément de blocage 32 se déplace dans ladite rainure 25. La profondeur de la rainure 25 est inférieure à la profondeur des renfoncements de blocages 23 et 24 de manière à conserver la fonction de blocage desdits renfoncements 23 et 24.

Dans le mode de réalisation présenté dans les figures 2 à 4, le volet 3 est formé par une paroi plane 30 avec deux bords latéraux parallèles. Deux pattes 33 s'étendent dans un plan perpendiculaire à la paroi plane 30, chacun le long d'une partie d'un des bords latéraux dudit volet 3. Chacune des pattes 33 comporte un élément de rotation 31 et un élément de blocage 32. Les pattes 33 sont sensiblement perpendiculaires à une droite passant par chacun des éléments de rotation 31, droite correspondant à l'axe de rotation. Afin de pouvoir s'insérer dans les renfoncements de blocage 23 et 24, et respectivement dans les renfoncements de rotation 26, les éléments de blocage 32, et respectivement les éléments de rotation 31, s'étendent en saillie depuis la face de leur pattes 33 respectives faisant face à l'une des parois latérales 201. Sur la face de la patte 33 orientée à l'opposé, c'est-à-dire la face orientée dans l'espace entre les deux pattes 33, chacune des pattes 33 comporte des nervures de rigidification.

Comme illustré en figure 4, les renfoncements 23, 24 et 26 sont de forme hémisphérique en creux, et les éléments de blocage 32 et les éléments de rotation 31 sont de forme hémisphérique en saillie, complémentaire à la forme hémisphérique de leur renfoncement 23, 24, 26 respectif. Par exemple, pour simplifier la conception, les renfoncements 23, 24 et 26 sont de forme sensiblement identiques, et les éléments de blocage 32 et les éléments de rotation 31 sont aussi de forme identique.

De même, pour simplifier la conception, les pattes 33 sont symétriques entre elles suivant un plan perpendiculaire à la droite passant par chacun des éléments de rotation 31.

Les parties des parois latérales 201 comportant les renfoncements 23, 24, 26 et la rainure 25 sont sensiblement perpendiculaire à l'axe de rotation du volet 3.

Au moins l'une des parois 201, 203, 204 de la boîte 2 comporte une butée 27 contre laquelle s'appuie le volet 3 en position fermée de sorte à éviter que le volet 3 ne pivote davantage vers la paroi de fond 202. Cette butée 27 permet un meilleur maintien du volet en position fermée même si des objets sont posés sur ledit volet 3. La butée 7 est par exemple disposée sur une des parois 203, 204 du boîtier qui ne comporte pas de renfoncement, et le volet 3 s'appuie sur ladite butée 3 par sa face orientée vers la paroi de fond 202.

Dans l'exemple illustré en figure 2 à 4, la boîte de rangement comporte deux parois latérales 201 sur lesquels sont disposées les renfoncements 23, 24 et 26, les parois latérales 201 se faisant face, une paroi arrière 203 et une paroi avant 204 reliant les parois latérales 201. La paroi de fond 202 ferme le boîtier 2 en reliant ces deux parois latérales 201, les parois avant 203 et arrière 204. Les renfoncements de rotation 31 sont disposés à proximité de la paroi avant 203. Le volet 3 pivote donc autour d'un axe situé à proximité de la paroi avant 203. La butée 27 est réalisée par un épaulement dans la paroi arrière 203, formant une marche contre laquelle s'appuie le volet 3, par sa face orientée vers la paroi de fond 202, lorsqu'il est en position fermée.

Afin de permettre l'insertion du volet dans le boîtier 2 jusqu'à ce que les éléments de rotation 31 s'insèrent dans leur renfoncement de rotation respectif 26, et les éléments de blocage 32 dans les renfoncements de blocage en position fermée 23 ou ouverte 24, les pattes 33 sont légèrement flexible. En variante, les parois latérales 201 sont aussi légèrement flexibles.

Cette flexibilité permet aussi le déplacement du volet 3 entre sa position fermée et sa position ouverte, les éléments de blocage 32 sortant des renfoncements par légère déformation de la patte 33 et/ou de la paroi latéral 201. L'élasticité des parois latérales 201 et/ou des pattes 33 permet d'assurer le maintien du volet dans sa position ouverte ou fermée après son déplacement entre ces deux positions, par le retour élastique qui pousse les éléments de blocage 32 dans les renfoncements 23 ou 24.

Comme illustré en figure 4, les éléments de rotation 31 en saillie sur les pattes 33 sont plus proche de la paroi 30 du volet 3 que les éléments de blocage 32. De cette manière, la partie de la patte 33 comportant l'élément de blocage 32 est plus flexible que la partie de la patte 33 comportant l'élément de rotation 31 car plus éloignée du point de liaison entre la patte 33 et la paroi 30. Cette disposition permet d'assurer un bon maintien et un guidage précis du volet 3 lors de sa rotation entre la position fermée et ouverte, et de limiter les risques que le volet 3 se déboîte par sortie des éléments de rotation 31 de leur renfoncement de rotation 26 respectifs, tout en permettant un déblocage de la position ouverte ou de la position fermée aisée grâce à une plus grande flexibilité des pattes 33 au niveau des éléments de blocage 32, permettant leur sortie des renfoncements de blocage 23 et 24 avec un effort acceptable, c'est-à-dire sans avoir besoin de forcer de manière importante.

En variantes, un des éléments en saillie 31 et 32, ou les deux, sont sur la tranche du volet 3, sur les bords latéraux faisant dudit volet 3 face aux parois latérales 201, c'est-à-dire dans l'épaisseur du volet 3.

## Revendications

1. Boîte de rangement (2) comportant des parois latérales (201, 203, 204) et une paroi de fond (202) définissant un volume intérieur (20), ledit volume intérieur (20) étant accessible par une ouverture (22), un volet (3) de fermeture disposée dans le volume intérieur (20), entre l'ouverture (22) et la paroi de fond (202), mobile par rotation entre une position de fermeture dans laquelle le volet (3) bloque l'accès à un volume inférieur (211) située entre la paroi de fond et ledit volet (3) et une position d'ouverture dans laquelle le volume inférieur (211) est accessible depuis l'extérieur du rangement, relié par une liaison pivot sur deux des parois latérales (201) se faisant face, la boîte de rangement (2) comportant deux renfoncements de rotation (26) sur les deux parois latérales (201) se faisant face et le volet (3) comporte deux éléments de rotation (31) en saillies disposés sur deux bords opposés du volet (3), s'insérant chacun dans un des renfoncements de rotation (26) de sorte à guider en rotation ledit volet (3) autour d'un axe de rotation passant par ces deux éléments de rotation (31), **caractérisé en ce que** la boîte de rangement comporte un moyen de blocage (23, 32) du volet (3) en position ouverte le moyen de blocage (23, 32) comporte en outre un renfoncement de blocage (23) en position ouverte dans une des parois latérales (201) et un élément de blocage (32) en saillie sur le volet (3) et dirigé vers la paroi latérale (201), le renfoncement de blocage (23) en position ouverte et l'élément de blocage (32) étant disposés de sorte que l'élément de blocage (32) s'insère dans le renfoncement de blocage (23) lorsque ledit volet (3) est en position ouverte et à bloquer ledit volet (3) dans cette position ouverte.

2. Boîte de rangement (2) suivant la revendication 1, comportant un moyen de blocage (24, 32) en position fermée formé par un renfoncement de blocage (24) en position fermée dans une des parois latérales (201) et un élément de blocage (32) en saillie sur le volet (3) et dirigé vers la paroi latérale (201), le renfoncement de blocage (24) en position fermée et l' élément de blocage (32) en saillie étant disposés de sorte que l'élément de blocage (32) en saillie s'insère dans le renfoncement de blocage (24) en position fermée lorsque ledit volet (3) est en position fermée et à bloquer ledit volet (3) dans cette position fermée.

3. Boîte de rangement (2) suivant l'une des revendications précédentes, comportant un élément de blocage (32) disposé sur le volet (3) et deux renfoncements de blocage, un premier renfoncement (23) en position fermée et un deuxième renfoncement (24) en position ouverte sur une des parois latérales (201), l'élément de blocage (32) s'insérant dans le premier renfoncement de blocage (23) de sorte à bloquer ledit volet (3) en position ouverte et s'insérant dans le deuxième renfoncement de blocage (24) disposé de sorte à bloquer ledit volet (3) en position fermée, de préférence la partie de la paroi latérale (201) comportant les deux renfoncements de blocage (23, 24) étant sensiblement perpendiculaire à l'axe de rotation du volet (3).

4. Boîte de rangement suivant la revendication 3, comportant une rainure (25) sur la paroi latérale (201) comportant les deux renfoncements de blocage (23, 24), ladite rainure (25) reliant le premier (23) et le deuxième renfoncement de blocage (24) suivant un arc de cercle centré sur l'axe de rotation du volet (3) de sorte que l'élément de blocage (32) se déplace dans ladite rainure (25) lors du déplacement du volet (3) entre la position fermée et la position ouverte, la rainure (25) étant de profondeur inférieure à la profondeur des renfoncements de blocage (23, 24).

5. Boîte de rangement (2) suivant l'une des revendications précédentes, dont le volet (3) comporte une paroi plane (30) avec deux bords latéraux parallèles, deux pattes (33) s'étendant perpendiculairement à la paroi plane (30) depuis les bords latéraux du volet (3), perpendiculairement à l'axe de rotation dudit volet (3), chacune des pattes (33) comportant un élément de rotation (31) et/ou un élément de blocage (32).

6. Boîte de rangement (2) suivant l'une des revendications précédentes, dont le ou les renfoncements (23, 24, 26) sont de forme hémisphérique et le ou les éléments en saillie (31, 32) sont de forme hémisphérique complémentaire à la forme hémisphérique du ou de leur renfoncements respectifs (23, 24, 26).

7. Véhicule comportant une boîte de rangement (2) suivant l'une des revendications précédentes dans son habitacle, de préférence dans une console centrale (10) ou une planche de bord (1).

## Patentansprüche

1. Aufbewahrungsbehälter (2) mit Seitenwänden (201, 203, 204) und einer Bodenwand (202), die ein Innenvolumen (20) definieren, wobei das Innenvolumen (20) durch eine Öffnung (22) zugänglich ist, wobei eine Verschlussklappe (3) im Innenvolumen (20) zwischen der Öffnung (22) und der Bodenwand (202) angeordnet ist, die zwischen einer Verschlussstellung, in der die Klappe (3) den Zugang zu einem unteren Volumen (211) zwischen der Wand blockiert, drehbeweglich ist Boden und Klappe (3) und eine Öffnungsstellung, in der das untere Volumen (211) von außerhalb der Lagerung zugänglich ist, verbunden durch eine Schwenkverbindung an zwei einander gegenüberliegenden Seitenwänden (201), wobei der Aufbewahrungskasten (2) zwei Drehausnehmungen (26) an den beiden einander gegenüberliegenden Seitenwänden (201) aufweist und die Klappe (3) zwei an zwei einander gegenüberliegenden Rändern der Klappe (3) angeordnete vorstehende Drehelemente (31) aufweist, die jeweils in eine der Drehausnehmungen (26) eingreifen, um die Klappe drehbar zu führen (3) Um eine durch diese beiden Drehelemente (31) verlaufende Drehachse herum, **dadurch gekennzeichnet, dass** der Aufbewahrungskasten ein Verriegelungsmittel (23, 32) der Klappe (3) in der geöffneten Stellung aufweist, das Verriegelungsmittel (23, 32) ferner eine Verriegelungsvertiefung (23) in der geöffneten Stellung in einer der Seitenwände (201) und ein Verriegelungselement (32) aufweist, das über die Klappe (3) vorsteht und auf die Seitenwand (201), die Verriegelungsvertiefung (23) in der geöffneten Stellung und das Verriegelungselement gerichtet ist (32) so angeordnet sind, dass das Verriegelungselement (32) in die Verriegelungsvertiefung (23) eingreift, wenn sich die Klappe (3) in der geöffneten Stellung befindet, und die Klappe (3) in dieser geöffneten Stellung verriegelt.

2. Aufbewahrungsbehälter (2) nach Anspruch 1, mit einer Sperreinrichtung (24, 32) in Schließstellung, die durch eine Sperrvertiefung (24) in Schließstellung in einer der Seitenwände (201) und ein von der Klappe (3) abstehendes und der Seitenwand (201) zugewandtes Sperrglied (32) gebildet ist, wobei die Sperrvertiefung (24) in Schließstellung und das abstehende Sperrglied (32) so angeordnet sind, dass das abstehende Sperrglied (32) in die Sperrvertiefung eingreift (24) in der geschlossenen Stellung, wenn sich die Klappe (3) in der geschlossenen Stellung befindet, und zum Blockieren der Klappe (3) in dieser geschlossenen Stellung.

3. Aufbewahrungsbox (2) nach einem der vorhergehenden Ansprüche, mit einem an der Klappe (3) angeordneten Verriegelungselement (32) und zwei Verriegelungsvertiefungen, einer ersten Vertiefung (23) in geschlossener Stellung und einer zweiten Vertiefung (24) in offener Stellung an einer der Seitenwände (201), wobei das Verriegelungselement (32) in die erste Verriegelungsvertiefung (23) eingreift, um die Klappe (3) in offener Stellung zu verriegeln, und in die zweite Verriegelungsvertiefung (24) eingreift, die so angeordnet ist, dass sie die Klappe verriegelt (3) In der geschlossenen Stellung ist vorzugsweise der die beiden Sperrvertiefungen (23, 24) aufweisende Teil der Seitenwand (201) im Wesentlichen senkrecht zur Drehachse der Klappe (3) angeordnet.

4. Aufbewahrungsbehälter nach Anspruch 3, mit einer Nut (25) an der Seitenwand (201) mit den beiden Verriegelungsvertiefungen (23, 24), wobei die Nut (25) die erste (23) und die zweite Verriegelungsvertiefung (24) in einem Kreisbogen verbindet, der um die Drehachse der Klappe (3) zentriert ist, sodass sich das Verriegelungselement (32) in der Nut (25) bewegt, wenn die Klappe (3) zwischen der geschlossenen und der offenen Position bewegt wird, wobei die Nut (25) ist mit einer Tiefe, die kleiner ist als die Tiefe der Arretiervertiefungen (23, 24).

5. Aufbewahrungsbox (2) nach einem der vorhergehenden Ansprüche, deren Klappe (3) eine ebene Wand (30) mit zwei parallelen Seitenrändern aufweist, wobei sich von den Seitenrändern der Klappe (3) aus zwei Laschen (33) senkrecht zur ebenen Wand (30) senkrecht zur Drehachse der Klappe (3) erstrecken, wobei jede der Laschen (33) ein Drehelement (31) und/oder ein Verriegelungselement (32) aufweist.

6. Aufbewahrungsbox (2) nach einem der vorhergehenden Ansprüche, bei der die Vertiefungen (23, 24, 26) halbkugelförmig und die Vorsprünge (31, 32) halbkugelförmig ausgebildet sind, komplementär zur Halbkugelform der jeweiligen Vertiefungen (23, 24, 26).

7. Fahrzeug mit einem Aufbewahrungskasten (2) nach einem der vorhergehenden Ansprüche in seinem Fahrgastraum, vorzugsweise in einer Mittelkonsole (10) oder einem Armaturenbrett (1).

## Claims

1. Storage box (2) comprising side walls (201, 203, 204) and a bottom wall (202) defining an inner volume (20), said inner volume (20) being accessible through an opening (22), a closure flap (3) arranged in the inner volume (20), between the opening (22) and the bottom wall (202), rotatable between a closure position in which the flap (3) blocks access to a lower quantity (211) located between the bottom wall and said flap (3) and an opening position in which the lower quantity (211) is accessible from outside the stowage, connected by a pivot connection to two of the facing side walls (201), the stowage box (2) comprising two rotational recesses (26) on the two facing side walls (201) and the flap (3) comprising two projecting rotational items (31) arranged on two opposite sides of the flap (3), each being inserted in one of the rotational recesses (26) so as to guiding said flap (3) in rotation about an axis of rotation passing through these two items of rotation (31), **characterised in that** the stowage box comprises a standstill means (23, 32) for the flap (3) in open position, the standstill means (23, 32) further comprises a standstill recess (23) in open position in one of the side walls (201) and a item standstill (32) projecting from the flap (3) and directed towards the side wall (201), the standstill recess (23) in an open position and the item standstill (32) being arranged so that the item standstill (32) is inserted into the standstill recess (23) when said flap (3) is in an open position and to lock said flap (3) in this open position.

2. Storage box (2) according to claim 1, comprising a standstill means (24, 32) in closed position formed by a standstill recess (24) in closed position in one of the side walls (201) and a standstill item (32) projecting from the flap (3) and directed towards the side wall (201), the standstill recess (24) in closed position and the item standstill (32) projecting therefrom being arranged such that the item standstill (32) projecting is inserted into the standstill recess (24) in a closed position when said flap (3) is in a closed position and to lock said flap (3) in said closed position.

3. Storage box (2) according to one of the previous claims, comprising a standstill item (32) arranged on the flap (3) and two standstill setbacks, a first setback (23) in a closed position and a second setback (24) in an open position on one of the side walls (201), the standstill item (32) being inserted into the first standstill setback (23) so as to lock the said flap (3) in an open position and being inserted into the second standstill setback (24) arranged so as to lock said flap (3) in a closed position, preferably the part of the side wall (201) comprising the two standstill setbacks (23, 24) being substantially perpendicular to the axis of rotation of the flap (3).

4. Storage box according to claim 3, comprising a groove (25) on the side wall (201) comprising the two standstill recesses (23, 24), said groove (25) connecting the first (23) and the second standstill recess (24) in an arc of a circle centred on the axis of rotation of the flap (3) so that the standstill item (32) moves in said groove (25) when the flap (3) moves between the closed position and the open position, the groove (25) being of a depth less than the depth of the standstill setbacks (23, 24).

5. Storage box (2) according to one of the previous claims, the flap (3) of which comprises a flat wall (30) with two parallel lateral edges, two tabs (33) extending perpendicularly to the flat wall (30) from the lateral edges of the flap (3), perpendicularly to the axis of rotation of said flap (3), each of the tabs (33) comprising a rotating item (31) and/or a standstill item (32).

6. Storage box (2) according to one of the previous claims, the recess or recesses (23, 24, 26) of which are hemispherical in shape and the projecting item or recesses (31, 32) are hemispherical in shape complementary to the hemispherical shape of the respective recess or recesses (23, 24, 26).

7. Vehicle comprising a storage box (2) according to one of the previous claims in its passenger compartment, preferably in a centre console (10) or dashboard (1).
